# EUROPÄISCHE PATENTANMELDUNG

(11) **EP 3 792 138 A1**
(43) Veröffentlichungstag der Anmeldung: **17.03.2021**
(21) Anmeldenummer: 19197156.3
(22) Anmeldetag: 13.09.2019
(51) Int. Cl.: B61L 15/00, B61L 27/00, B61D 19/00

(54) **VERFAHREN UND VORRICHTUNG ZUM BEREITSTELLEN EINER INSTANDHALTUNGSINFORMATION ÜBER EIN TÜRSYSTEM FÜR EIN FAHRZEUG UND TÜRSYSTEM FÜR EIN FAHRZEUG**

(71) Anmelder: Knorr-Bremse Gesellschaft mit beschränkter Haftung, 2340 Mödling (AT)
(72) Erfinder: BRAMAUER, Johann, 3341 Ybbsitz (AT); EKKER, Reinhard, 3270 Scheibbs (AT)
(74) Vertreter: Aurigium Leischner & Luthe

(57) **Zusammenfassung**

Es wird ein Verfahren zum Bereitstellen einer Instandhaltungsinformation (129) über ein Türsystem (110) für ein Fahrzeug (100) vorgestellt. Das Verfahren weist einen Schritt des Einlesens von erfassten Prozessdaten (119) hinsichtlich eines Bewegungsvorgangs einer Tür (111) des Türsystems (110) auf. Die Prozessdaten (119) repräsentieren ein aktuelles Verhalten zumindest eines Antriebselements (116) des Türsystems (110) während des Bewegungsvorgangs. Auch weist das Verfahren einen Schritt des Korrelierens der Prozessdaten (119) mit einem Positionsverlauf von Positionen der Tür (111) während des Bewegungsvorgangs, um eine Kennlinie des aktuellen Verhaltens des zumindest einen Antriebselements (116) an den Positionen der Tür (111) zu generieren. Das Verfahren weist ferner einen Schritt des Vergleichens der Kennlinie mit einer Referenz-Kennlinie auf, die ein Soll-Verhalten des zumindest einen Antriebselements (116) an den Positionen der Tür (111) repräsentiert, um eine Abweichung der Kennlinie von der Referenz-Kennlinie zu ermitteln. Zudem weist das Verfahren einen Schritt des Zuordnens der Abweichung einem Teilbereich des abhängig von einer Beteiligung unterschiedlicher Bewegungselemente (112, 113, 114) des Türsystems (110) an unterschiedlichen Phasen des Bewegungsvorgangs der Tür (111) in eine Mehrzahl von Teilbereichen unterteilten Positionsverlaufs auf, um die Instandhaltungsinformation (129) zu bestimmen.

## Beschreibung

Die vorliegende Erfindung bezieht sich auf ein Verfahren zum Bereitstellen einer Instandhaltungsinformation über ein Türsystem für ein Fahrzeug, auf eine entsprechende Vorrichtung und auf ein Türsystem für ein Fahrzeug, insbesondere für ein Schienenfahrzeug.

Für zustandsabhängige Instandhaltung und vorausschauende Instandhaltung können Algorithmen verwendet werden, um insbesondere aus Prozessdaten und Umfelddaten zukünftige Zustände zu prognostizieren.

Vor diesem Hintergrund ist es die Aufgabe der vorliegenden Erfindung, ein verbessertes Verfahren zum Bereitstellen einer Instandhaltungsinformation über ein Türsystem für ein Fahrzeug, eine verbesserte Vorrichtung zum Bereitstellen einer Instandhaltungsinformation über ein Türsystem für ein Fahrzeug und ein verbessertes Türsystem für ein Fahrzeug zu schaffen.

Diese Aufgabe wird durch ein Verfahren zum Bereitstellen einer Instandhaltungsinformation über ein Türsystem für ein Fahrzeug, durch eine entsprechende Vorrichtung und durch ein entsprechendes Computerprogramm sowie durch ein Türsystem für ein Fahrzeug gemäß den Hauptansprüchen gelöst.

Gemäß Ausführungsformen kann insbesondere zu Zwecken der Instandhaltung eines Türsystems eines Fahrzeugs, insbesondere eines Schienenfahrzeugs, eine Segmentierung eines Türlaufs nach kinematischen Elementen bzw. im Hinblick auf an unterschiedlichen Bewegungsphasen beteiligten Elementen des Türsystems vorgenommen werden. Hierbei können beispielsweise bei festgestellten Abweichungen zwischen einem Soll-Verhalten und einem Ist-Verhalten eines Türantriebs im Hinblick auf eine Instandhaltung solche Elemente des Türsystems berücksichtigt werden, die in der jeweiligen Bewegungsphase auch tatsächlich Anteil an einem Bewegungsverhalten der Tür haben.

Vorteilhafterweise kann gemäß Ausführungsformen insbesondere ein Zustand eines Systems oder einer Komponente vorhergesagt, beispielsweise im Sinne von zustandsabhängiger Instandhaltung bzw. vorausschauender Instandhaltung. Hierbei kann, weiß auch eine Zuordnung von mittels Algorithmik erkannten Anomalien zu konkreten Fehlerbildern verbessert werden, auch wenn sich eingesetzte Antriebsysteme innerhalb einzelner Bewegungsphasen teils sehr unterschiedlich verhalten. Durch die Segmentierung des Türlaufs nach Bewegungsphasen kann insbesondere eine Zuordnung von erkannten Anomalien zu konkreten Fehlerbildern basierend auf der jeweiligen Bewegungsphase des Türlaufs realisiert werden. Auch kann beispielsweise eine Plausibilisierung von erhobenen Sensorinformationen eines Türsystems bzw. Einstiegssystems durch Zuordnung dieser zu den einzelnen kinematischen Teilbereichen bzw. Abschnitten des Türlaufs ermöglicht werden. Somit können Aussagekraft und Nutzen angewandter Algorithmen für zustandsabhängige Instandhaltung bzw. vorausschauende Instandhaltung verbessert werden.

Somit können durch die Einteilung des Türlaufs Bewegungsphasen mit jeweils beteiligten Elementen insbesondere Anomalien in aufgenommen Signalen mit den Bewegungsphasen und beteiligten Elementen abgeglichen werden. Es können beispielsweise einzelne Fehlerbilder als Ursache für eine Anomalie ausgeschlossen werden, da diese an der fraglichen kinematischen Phase des Türlaufs gar nicht beteiligt sind. So kann eine konkretere Aussage hinsichtlich des zugrunde liegende Fehlerbilds getroffen werden. Es kann erreicht werden, dass Anomalien nicht mehr pauschal über den gesamten Türlauf bewertet werden, sondern gezielt auf einzelne kinematische Elemente hin betrachtet werden. Dies kann insbesondere eine genauere Zuordnung zu einem realen Fehlerbild ermöglichen. Des Weiteren kann durch die fokussierte Betrachtungsweise auch eine höhere Prognosegüte erzielt werden. Es kann ferner eine Plausibilisierung bzw. eine Kombination von gesammelten Prozessdaten und zusätzlich oder alternativ Umfelddaten anhand der Bewegungsphase des Türlaufs des jeweiligen Einstiegssystems realisiert werden. Dadurch kann eine Prognosegüte von Algorithmen für zustandsabhängige Instandhaltung und vorausschauende Instandhaltung erhöht werden.

Ein Verfahren zum Bereitstellen einer Instandhaltungsinformation über ein Türsystem für ein Fahrzeug weist folgende Schritte auf:
Einlesen von erfassten Prozessdaten hinsichtlich eines Bewegungsvorgangs einer Tür des Türsystems, wobei die Prozessdaten ein aktuelles Verhalten zumindest eines Antriebselements des Türsystems während des Bewegungsvorgangs repräsentieren;
Korrelieren der Prozessdaten mit einem Positionsverlauf von Positionen der Tür während des Bewegungsvorgangs, um eine Kennlinie des aktuellen Verhaltens des zumindest einen Antriebselements an den Positionen der Tür zu generieren;
Vergleichen der Kennlinie mit einer Referenz-Kennlinie, die ein Soll-Verhalten des zumindest einen Antriebselements an den Positionen der Tür repräsentiert, um eine Abweichung der Kennlinie von der Referenz-Kennlinie zu ermitteln; und

Zuordnen der Abweichung einem Teilbereich des abhängig von einer Beteiligung unterschiedlicher Bewegungselemente des Türsystems an unterschiedlichen Phasen des Bewegungsvorgangs der Tür in eine Mehrzahl von Teilbereichen unterteilten Positionsverlaufs, um die Instandhaltungsinformation zu bestimmen.

Dieses Verfahren kann bzw. die Schritte des Verfahrens können beispielsweise in Software oder Hardware oder in einer Mischform aus Software und Hardware beispielsweise in einer Vorrichtung oder einem Steuergerät implementiert sein. Das Verfahren kann auch in einer ortsfesten Vorrichtung (Server zur Datenauswertung) ausgeführt werden wobei die Sensordaten von einem Gerät am Zug erfasst und über eine oder mehrere Systeme übermittelt werden.

Bei dem Fahrzeug kann es sich um ein Fahrzeug zur Personenbeförderung, beispielsweise um ein Schienenfahrzeug handeln.

Bei dem Bewegungsvorgang der Tür kann es sich um einen Öffnungsvorgang, einen Schließvorgang oder einen Türzyklus einschließlich eines Öffnungsvorgangs und eines Schließvorgangs der Tür handeln. Der Bewegungsvorgang ist in eine Abfolge von Phasen unterteilt. Die Phasen können beispielsweise ein Entriegeln, ein Ausschwenken, eine Linearbewegung, ein Einschwenken und ein Verriegeln repräsentieren. In den unterschiedlichen Phasen können unterschiedliche Bewegungselemente an dem Bewegungsvorgang der Tür beteiligt sein. Zwei aufeinanderfolgende Phasen können sich in den beteiligten Bewegungselementen unterscheiden. Somit kann jeder Phase zumindest ein Bewegungselement zugeordnet sein, das hauptsächlich an dem Bewegungsvorgang innerhalb dieser Phase beteiligt ist. Beteiligte Bewegungselemente können zumindest eine Verriegelungseinrichtung, zumindest eine Schwenkeinrichtung und zumindest eine Führungseinrichtung sein.

Während des Bewegungsvorgangs durchläuft die Tür eine Abfolge von Positionen. Die Tür kann die Positionen während des Bewegungsvorgangs relativ zu einem Türrahmen bzw. einem Fahrzeugchassis einnehmen. Die Abfolge von Positionen wird als Positionsverlauf bezeichnet. Der Positionsverlauf ist in eine Mehrzahl von Teilbereichen unterteilt, wobei jeder Phase des Bewegungsvorgangs ein Teilbereich des Positionsverlaufs zugeordnet sein kann.

Die Prozessdaten können durch eine Erfassungseinrichtung des Fahrzeugs bzw. des Türsystems während des Bewegungsvorgangs erfasste Daten repräsentieren. Die Erfassungseinrichtung kann zumindest einen Sensor umfassen, der mit der Tür oder zumindest einem Türelement gekoppelt ist. Beispielsweise kann die Erfassungseinrichtung ausgebildet sein, um einen Stromfluss durch einen Antrieb zum Durchführen des Bewegungsvorgangs zu erfassen. Somit können die Prozessdaten eine Abfolge von unter Verwendung der Erfassungseinrichtung während des Bewegungsvorgangs erfasste Messwerte repräsentieren. Die Prozessdaten können in Form eines elektrischen Eingangssignals über eine Schnittstelle, beispielsweise zu der Erfassungseinrichtung, eingelesen werden.

Im Schritt des Korrelierens kann eine Zuordnung zwischen den Prozessdaten und den Positionen des Positionsverlaufs durchgeführt werden. Somit kann im Schritt des Korrelierens jeder Position beispielsweise ein Messwert zugeordnet werden, der zu dem Zeitpunkt erfasst wurde, zu dem die Tür die entsprechende Position innehatte. Die Schritte des Einlesens und Korrelierens können zeitlich aufeinanderfolgend durchgeführt werden. Alternativ können die Schritte des Einlesens und Korrelierens zeitgleich durchgeführt werden, beispielsweise indem zu jeder Position des Positionsverlaufs ein Messwert erfasst wird.

Die Referenz-Kennlinie kann vorbestimmt sein und beispielsweise über eine Schnittstelle zu einer Speichereinrichtung eingelesen werden. Im Schritt des Vergleichens können die Kennlinie und die Referenz-Kennlinie mit einem geeigneten Verfahren verglichen werden, beispielsweise im Zeitbereich und/oder im Frequenzbereich. Beispielsweise kann die Abweichung einen Unterschied zwischen der Kennlinie und der Referenz-Kennlinie darstellen, der ein vorbestimmtes Kriterium erfüllt.

Indem die Abweichung einem Teilbereich und somit einer Phase zugeordnet wird, kann das Bewegungselement bestimmt werden, das an dem Bewegungsvorgang in dieser Phase beteiligt ist. Es besteht eine hohe Wahrscheinlichkeit, dass die Abweichung auf eine Veränderung der Funktion dieses Bewegungselements zurückzuführen ist. Somit kann die Instandhaltungsinformation einen Hinweis auf das Bewegungselement umfassen, durch das die Abweichung bewirkt wurde. Die Instandhaltungsinformation kann quantitative und zusätzlich oder alternativ qualitative Angaben hinsichtlich der Abweichung, der Position, des Teilbereichs und zusätzlich oder alternativ zumindest eines Bewegungselements aufweisen. Die Instandhaltungsinformation kann in Form eines elektrischen Ausgabesignals bereitgestellt werden. Beispielsweise kann die Instandhaltungsinformation zum Ansteuern einer Warneinrichtung verwendet werden, in einem Fehlerspeicher abgelegt werden, oder von einer geeigneten Einrichtung weiterverarbeitet werden.

Gemäß einer Ausführungsform kann das Verfahren einen Schritt des Unterteilens des Positionsverlaufs in die Mehrzahl von Teilbereichen in Abhängigkeit von einer Beteiligung der unterschiedlichen Bewegungselemente des Türsystems an den unterschiedlichen Phasen des Bewegungsvorgangs der Tür aufweisen. Hierbei können eine Bestimmung der Phasen des Bewegungsvorgangs bzw. Türlaufs durch Messung an einem Einstieg der zu überwachenden Baureihe des Fahrzeugs, eine Erstellung eines Phasenmodells und zusätzlich oder alternativ eine Bereitstellung des Phasenmodells in geeigneter Form erfolgen. Eine solche Ausführungsform bietet den Vorteil, dass für jede Bauart von Türsystem ein geeignetes Phasenmodell zugrundegelegt werden kann.

Auch kann im Schritt des Zuordnens eine erste Instandhaltungsinformation bestimmt werden, wenn die Abweichung einem ersten Teilbereich des Bewegungsvorgangs zugeordnet wird, an dem eine erste Teilmenge der Bewegungselemente beteiligt ist. Ferner kann hierbei im Schritt des Zuordnens eine von der ersten Instandhaltungsinformation unterschiedliche, zweite Instandhaltungsinformation bestimmt wird, wenn die Abweichung einem zweiten Teilbereich des Bewegungsvorgangs zugeordnet wird, an dem eine zweite Teilmenge der Bewegungselemente beteiligt ist. Die zweite Teilmenge kann sich zumindest partiell von der ersten Teilmenge unterscheiden. Eine solche Ausführungsform bietet den Vorteil, dass Hinweise auf mögliche Fehlerquellen oder bezüglich der Instandhaltung besonders zu berücksichtigende Bewegungselemente zur Verfügung gestellt werden können, sodass eine Instandhaltung erleichtert werden kann.

Insbesondere können im Schritt des Einlesens die Prozessdaten ansprechend auf ein Türöffnungssignal und zusätzlich oder alternativ ansprechend auf ein Türschließsignal eingelesen werden. Eine solche Ausführungsform bietet den Vorteil, dass eine genaue zeitliche Referenz für die Korrelation zur Verfügung steht.

Gemäß einer Ausführungsform können im Schritt des Einlesens Prozessdaten eingelesen werden, die eine Stromaufnahme des zumindest einen Antriebselements repräsentieren. Zusätzlich oder alternativ kann im Schritt des Einlesens ein Sensorsignal eingelesen werden, das die Positionen der Tür während des Bewegungsvorgangs repräsentiert. Bei dem zumindest einen Antriebselement kann es sich um einen Elektromotor oder ein anderes Stellglied handeln. Eine solche Ausführungsform bietet den Vorteil, dass auf einfache und zuverlässige Weise Rückschlüsse über einen Instandhaltungszustand des Türsystems getroffen werden können.

Zudem kann das Verfahren einen Schritt des Ausgebens der bestimmten Instandhaltungsinformation an eine Schnittstelle zu einer Einrichtung zum Ausführen eines Algorithmus für zustandsabhängige Instandhaltung und zusätzlich oder alternativ eines Algorithmus für vorausschauende Instandhaltung aufweisen. Die Instandhaltungsinformation kann als eine Eingangsgröße für Algorithmen der zustandsabhängigen Instandhaltung und zusätzlich oder alternativ der vorausschauenden Instandhaltung verwendet werden. Eine solche Ausführungsform bietet den Vorteil, dass eine Prognosegüte solcher Algorithmen weiter verbessert werden kann.

Zumindest einer der Schritte des Verfahrens kann teilweise oder zur Gänze fahrzeugextern ausgeführt werden. Somit kann das Verfahren vollständig oder teilweise nicht am Fahrzeug sondern in einer separat zu dem Fahrzeug angeordneten Vorrichtung zur Ermittlung des Wartungszustandes ausgeführt werden.

Der hier vorgestellte Ansatz schafft ferner eine Vorrichtung zum Bereitstellen einer Instandhaltungsinformation über ein Türsystem für ein Fahrzeug, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden. Die Vorrichtung kann eine Türsteuerung darstellen oder in eine Türsteuervorrichtung integriert sein.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die

Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ein Türsystem für ein Fahrzeug weist folgende Merkmale auf:
eine Ausführungsform der vorstehend genannten Vorrichtung; und
die Tür, das zumindest eine Antriebselement und die Bewegungselemente, wobei das zumindest eine Antriebselement ausgebildet ist, um den Bewegungsvorgang der Tür zu bewirken, wobei die Bewegungselemente an den Bewegungsvorgang der Tür beteiligt sind, wobei das zumindest eine Antriebselement signalübertragungsfähig mit der als fahrzeugexterne Einrichtung ausgeführten Vorrichtung verbindbar oder mit der als fahrzeuginterne Einrichtung ausgeführten Vorrichtung verbunden ist.

Wenn eine fahrzeugexterne Vorrichtung verwendet wird, kann eine Datenauswertung beispielsweise in einem ortsfesten Server ausgeführt werden.

In dem Türsystem kann eine Ausführungsform der vorstehend genannten Vorrichtung vorteilhaft eingesetzt oder verwendet werden, um eine Instandhaltungsinformation über das Türsystem bereitzustellen. Das Türsystem kann auch zumindest eine Erfassungseinrichtung zum Erfassen der Prozessdaten aufweisen. Die Vorrichtung kann mit der zumindest einen Erfassungseinrichtung signalübertragungsfähig verbunden sein. Optional kann das Türsystem auch eine Einrichtung zum Ausführen eines Algorithmus für zustandsabhängige Instandhaltung und zusätzlich oder alternativ eines Algorithmus für vorausschauende Instandhaltung aufweisen. Die Einrichtung zum Ausführen kann mit der Vorrichtung signalübertragungsfähig verbunden sein oder mit der Vorrichtung kombiniert ausgeführt sein.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit einem Türsystem gemäß einem Ausführungsbeispiel;
Fig. 2 ein schematisches Diagramm einer Referenz-Kennlinie gemäß einem Ausführungsbeispiel;
Fig. 3 ein schematisches Vergleichsdiagramm einer Kennlinie und einer Referenz-Kennlinie gemäß einem Ausführungsbeispiel; und
Fig. 4 ein Ablaufdiagramm eines Verfahrens zum Bereitstellen gemäß einem Ausführungsbeispiel.

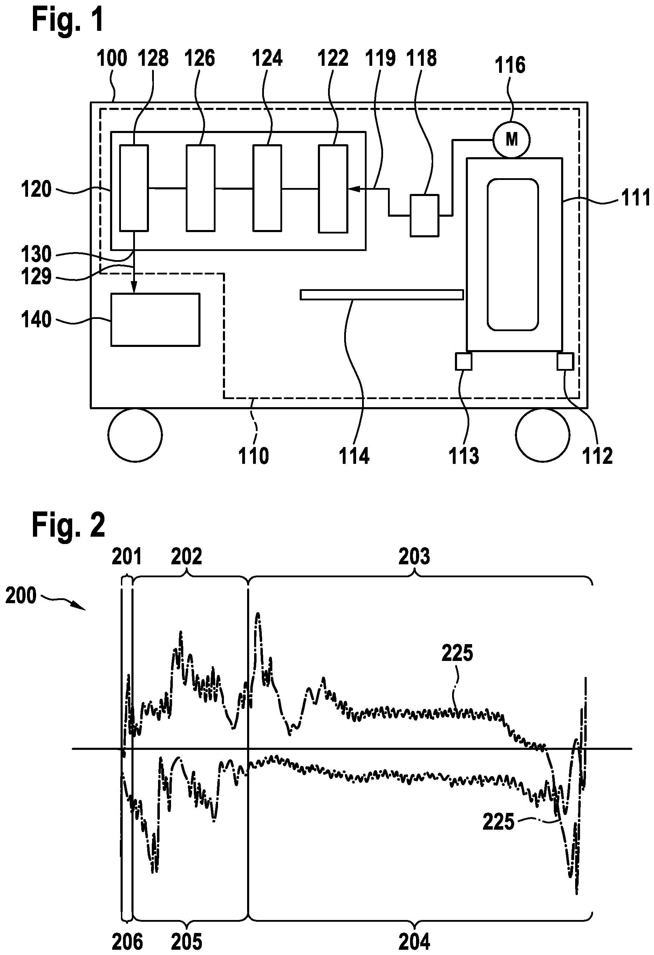

**Fig. 1** zeigt eine schematische Darstellung eines Fahrzeugs 100 mit einem Türsystem 110 gemäß einem Ausführungsbeispiel. Bei dem Fahrzeug 100 handelt es sich beispielhaft um ein Schienenfahrzeug. Das Fahrzeug 100 weist das Türsystem 110 auf. Das Türsystem 110 umfasst eine Tür 111, lediglich beispielhaft drei Bewegungselemente 112, 113 und 114, zumindest ein Antriebselement 116 und eine Bereitstellungsvorrichtung 120 bzw. Vorrichtung 120 zum Bereitstellen einer Instandhaltungsinformation 129 über das Türsystem 110. Gemäß dem hier dargestellten Ausführungsbeispiel umfasst das Türsystem 110 auch eine Erfassungseinrichtung 118. Gemäß einem anderen Ausführungsbeispiel kann die Erfassungseinrichtung 118 auch von dem Türsystem 110 getrennt vorgesehen oder in der Steuerung integriert sein, die beispielsweise in der Vorrichtung 120 realisiert ist.

Die Tür 111 ist relativ zu einem Chassis des Fahrzeugs 100 bewegbar angeordnet. Während eines Bewegungsvorgangs der Tür 111 erfolgt bei einem Öffnungsvorgang zunächst eine Entriegelung, gefolgt von einem Ausschwenken und schließlich eine Linearbewegung und bei einem Schließvorgang zunächst eine Linearbewegung, gefolgt von einem Einschwenken und schließlich eine Verriegelung. Das zumindest eine Antriebselement 116 ist ausgebildet, um den Bewegungsvorgang der Tür 111 zu bewirken. Bei dem Antriebselement 116, das in Fig. 1 gezeigt ist, handelt es sich beispielsweise um einen Elektromotor oder dergleichen. Bewegungselemente 112, 113 und 114 sind an dem Bewegungsvorgang der Tür 111 beteiligt. Insbesondere handelt es sich hierbei um zumindest eine Verriegelungseinrichtung 112, um zumindest eine Schwenkeinrichtung 113 und zumindest eine Führungseinrichtung 140.

Das Antriebselement 116 ist signalübertragungsfähig mit der Erfassungseinrichtung 118 verbunden. Die Erfassungseinrichtung 118 ist signalübertragungsfähig mit der Vorrichtung 120 verbunden. Somit besteht eine signalübertragungsfähige Verbindung zwischen dem Antriebselement 116 und der Vorrichtung 120. Die Erfassungseinrichtung 118 ist ausgebildet, um Prozessdaten 119 hinsichtlich des Antriebselements 116 und somit hinsichtlich des Bewegungsvorgangs zu erfassen und der Vorrichtung 120 bereitzustellen. Gemäß einem Ausführungsbeispiel ist die Erfassungseinrichtung 118 oder die von der Erfassungseinrichtung 118 umgesetzte Funktionalität von der Vorrichtung 120 umfasst. Die erfassten Prozessdaten 119 repräsentieren bzw. charakterisieren beispielsweise eine Stromaufnahme des Antriebselements 116. Hierbei ist die Erfassungseinrichtung 118 ausgebildet, um die Stromaufnahme des Antriebselements 116 zu erfassen und als die erfassten Prozessdaten 119 bereitzustellen. Somit werden die Prozessdaten 119 beispielsweise in Form eines einen zeitlichen oder wegabhängigen Verlauf der Stromaufnahme anzeigenden elektrischen Signals bereitgestellt.

Die Vorrichtung 120 bzw. Bereitstellungsvorrichtung 120 weist eine Einleseeinrichtung 122, eine Korrelationseinrichtung 124, eine Vergleichseinrichtung 126 und eine Zuordnungseinrichtung 128 auf. Die Vorrichtung 120 ist ausgebildet, um die Instandhaltungsinformation 129 über das Türsystem 110 bereitzustellen. Anders ausgedrückt ist die Vorrichtung 120 ausgebildet, um unter Verwendung der Prozessdaten 119 die Instandhaltungsinformation 129 zu bestimmen.

Die Aufgaben der Vorrichtung 120 können auch wayside an einem Server ausgeführt werden. Somit ist Vorrichtung 120 oder sind Teile der Vorrichtung 120 gemäß einem Ausführungsbeispiel extern zu dem Fahrzeug 100 realisiert. Eine Datenübertragung zwischen der Vorrichtung 120 und dem Fahrzeug 100 kann beispielsweise drahtlos erfolgen.

Die Einleseeinrichtung 122 der Vorrichtung 120 ist ausgebildet, um die erfassten Prozessdaten 119 hinsichtlich des Bewegungsvorgangs der Tür 111 einzulesen, genauer gesagt über eine Schnittstelle zu der Erfassungseinrichtung 118 einzulesen. Aus den Prozessdaten 119 lässt sich ein aktuelles Verhalten des Antriebselements 116 während des Bewegungsvorgangs ablesen. Die Einleseeinrichtung 122 ist auch ausgebildet, um die eingelesenen Prozessdaten 119 an die Korrelationseinrichtung 124 der Vorrichtung 120 weiterzuleiten, beispielsweise in Form eines weiteren elektrischen Signals. Die Korrelationseinrichtung 124 ist ausgebildet, um die Prozessdaten 119 mit einem Positionsverlauf von Positionen der Tür 111 während des Bewegungsvorgangs zu korrelieren, um eine Kennlinie des aktuellen Verhaltens des zumindest einen Antriebselements 116 an den im Laufe des Bewegungsvorgangs eingenommenen Positionen der Tür 111 zu generieren. Die Korrelationseinrichtung 124 ist auch ausgebildet, um die generierte Kennlinie an die Vergleichseinrichtung 126 weiterzuleiten. Die Vergleichseinrichtung 126 ist ausgebildet, um die von der Korrelationseinrichtung 124 generierte Kennlinie mit einer Referenz-Kennlinie zu vergleichen, um eine Abweichung der Kennlinie von der Referenz-Kennlinie zu ermitteln. Die Referenz-Kennlinie repräsentiert hierbei ein Soll-Verhalten des Antriebselements 116 an den Positionen der Tür 111 während des Bewegungsvorgangs. Beispielsweise ist die Vergleichseinrichtung 126 ausgebildet, um einen zeitlichen Verlauf der generierten Kennlinie mit der Referenz-Kennlinie zu vergleichen, um die Abweichung zu ermitteln. Die Vergleichseinrichtung 126 ist auch ausgebildet, um die ermittelte Abweichung an die Zuordnungseinrichtung 128 weiterzuleiten. Die Zuordnungseinrichtung 128 ist ausgebildet, um die ermittelte Abweichung einem Teilbereich des Positionsverlaufs zuzuordnen, um die Instandhaltungsinformation 129 zu bestimmen. Der Positionsverlauf ist abhängig von einer Beteiligung unterschiedlicher Bewegungselemente 112, 113 und 114 des Türsystems 110 an unterschiedlichen Phasen des Bewegungsvorgangs der Tür 111 in eine Mehrzahl von Teilbereichen unterteilt.

Gemäß einem Ausführungsbeispiel ist die Einleseeinrichtung 122 insbesondere ausgebildet, um die Prozessdaten 119 ansprechend auf ein Türöffnungssignal und/oder ein Türschließsignal des Türsystems 110 einzulesen. Hierzu kann die Vorrichtung 120 signalübertragungsfähig mit einer Betätigungseinrichtung zum Betätigen der Tür 111 verbunden sein. Auch ist die Einleseeinrichtung 122 gemäß einem Ausführungsbeispiel ausgebildet, um ein Sensorsignal einzulesen, welches die Positionen der Tür 111 während des Bewegungsvorganges angibt bzw. repräsentiert.

Die Zuordnungseinrichtung 128 ist gemäß einem Ausführungsbeispiel ausgebildet, um eine erste Instandhaltungsinformation 129 zu bestimmen, wenn die Abweichung einem ersten Teilbereich des Bewegungsvorgangs zugeordnet wird, an dem eine erste Teilmenge der Bewegungselemente beteiligt ist, beispielsweise die zumindest eine Verriegelungseinrichtung 112. Ferner ist die Zuordnungseinrichtung 128 hierbei ausgebildet, um eine von der ersten Instandhaltungsinformation 129 unterschiedliche, zweite Instandhaltungsinformation 129 zu bestimmen, wenn die Abweichung einem zweiten Teilbereich des Bewegungsvorgangs zugeordnet wird, an dem eine zweite Teilmenge der Bewegungselemente beteiligt ist, beispielsweise die zumindest eine Schwenkeinrichtung 113 und/oder die zumindest eine Führungseinrichtung 114.

Die Vorrichtung 120 ist gemäß einem Ausführungsbeispiel auch ausgebildet, um die bestimmte Instandhaltungsinformation 129 an eine Schnittstelle 130 zu einer Einrichtung 140 zum Ausführen eines Algorithmus für zustandsabhängige Instandhaltung und/oder eines Algorithmus für vorausschauende Instandhaltung auszugeben. Hierzu kann die Vorrichtung 120 eine Ausgabeeinrichtung aufweisen. Auch ist die Vorrichtung 120 gemäß einem Ausführungsbeispiel ausgebildet, um den Positionsverlauf in Abhängigkeit von einer Beteiligung der unterschiedlichen Bewegungselemente 112, 113 und 114 an den unterschiedlichen Phasen des Bewegungsvorgangs der Tür 111 in die Mehrzahl von Teilbereichen zu unterteilen. Dazu kann die Vorrichtung 120 eine Unterteilungseinrichtung aufweisen. Die Unterteilung kann für das Türsystem 110 einmalig ausgeführt werden.

**Fig. 2** zeigt ein schematisches Diagramm einer Referenz-Kennlinie 225 und von Teilbereichen 201, 202, 203, 204, 205 und 206 eines Positionsverlaufs gemäß einem Ausführungsbeispiel. Die Referenz-Kennlinie 225 und die Teilbereiche 201, 202, 203, 204, 205 und 206 werden durch die Vorrichtung zum Bereitstellen einer Instandhaltungsinformation aus Fig. 1 oder eine ähnliche Vorrichtung verwendet. Anders ausgedrückt zeigt das Diagramm von Fig. 2 einen Stromverlauf über Positionen der Tür während des Bewegungsvorgangs.

An einer Abszissenachse des Diagramms 200 ist der Positionsverlauf von Positionen beispielsweise in Impulsen eines Sensorsignals eines Positionssensors oder Wegsensors aufgetragen. An einer Ordinatenachse des Diagramms 200 ist ein Strom bzw. eine Stromaufnahme des Antriebselements des Türsystems aus Fig. 1 oder eines ähnlichen Türsystems beispielsweise in Milliampere aufgetragen.

Der Positionsverlauf bzw. Türlauf des Türsystems ist in kinematische Elemente eingeteilt bzw. unterteilt, hier beispielsweise sechs Phasen bzw. Teilbereiche 201, 202, 203, 204, 205 und 206 pro Türzyklus. Ein erster Teilbereich 201 des Positionsverlaufs repräsentiert ein Entriegeln der Tür des Türsystems. Ein zweiter Teilbereich 202 des Positionsverlaufs repräsentiert ein Ausschwenken der Tür. Ein dritter Teilbereich 203 repräsentiert ein lineares Öffnen der Tür. Die Teilbereiche 201, 202 und 203 repräsentieren einen Öffnungsvorgang der Tür. Ein vierter Teilbereich 204 repräsentiert ein lineares Schließen der Tür. Ein fünfter Teilbereich 205 repräsentiert ein Einschwenken der Tür. Ein sechster Teilbereich 206 repräsentiert ein Verriegeln der Tür.

Bezogen auf das Türsystem aus Fig. 1 sei angemerkt, dass in dem ersten Teilbereich 201 und in dem sechsten Teilbereich 206 die zumindest eine Verriegelungseinrichtung des Türsystems an dem Bewegungsvorgang beteiligt ist, in dem zweiten Teilbereich 202 und in dem fünften Teilbereich 205 die zumindest eine Schwenkeinrichtung des Türsystems an dem Bewegungsvorgang beteiligt ist und in dem dritten Teilbereich 203 und in dem vierten Teilbereich 204 die zumindest eine Führungseinrichtung des Türsystems an dem Bewegungsvorgang beteiligt ist.

Lediglich beispielhaft liegen die Grenzen zwischen Phasen bzw. Teilbereichen gemäß dem hier dargestellten Ausführungsbeispiel bei ca. 10% Impulsen als Grenze zwischen dem ersten Teilbereich 201 und dem zweiten Teilbereich 202 bzw. dem fünften Teilbereich 205 und dem sechsten Teilbereich 206 und bei ca. 30% Impulsen als Grenze zwischen dem zweiten Teilbereich 202 und dem dritten Teilbereich 203 bzw. dem vierten Teilbereich 204 und dem fünften Teilbereich 205, jeweils von einer Ruhelage der Tür in geschlossenem Zustand betrachtet.

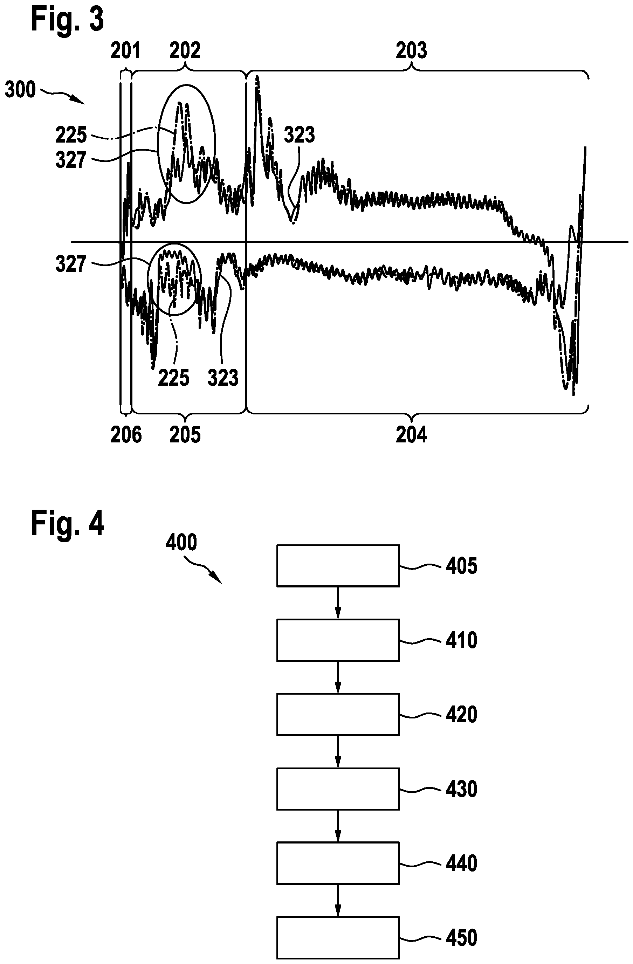

**Fig. 3** zeigt ein schematisches Vergleichsdiagramm 300 einer Kennlinie 323 und einer Referenz-Kennlinie 225 gemäß einem Ausführungsbeispiel. Bei der Referenz-Kennlinie 225 handelt es sich um die Referenz-Kennlinie aus Fig. 2. Die Kennlinie 323 ist durch die Vorrichtung aus Fig. 1 oder eine ähnliche Vorrichtung generiert. Das Vergleichsdiagramm 300 entspricht dem Diagramm aus Fig. 2 mit Ausnahme dessen, dass die Kennlinie 323 der Referenz-Kennlinie 225 überlagert ist.

In Fig. 3 bestehen beispielhaft eine Abweichung 327 zwischen der Referenz-Kennlinie 225 und der Kennlinie 323 in dem zweiten Teilbereich 202 sowie eine Abweichung 327 zwischen der Referenz-Kennlinie 225 und der Kennlinie 323 in dem fünften Teilbereich 205. Die Referenz-Kennlinie 225 stellt Ausgangszustand oder Soll-Zustand des Türsystems aus Fig. 1 oder eines ähnlichen Türsystems dar und die Kennlinie 323 ergibt sich hierbei beispielhaft durch ein Winkelspiel im Türsystem. Die Abweichungen 327, welche durch Ellipsen symbolisch veranschaulicht sind, kennzeichnen Bereiche im Vergleich Diagramm 300, an denen Unterschiede zwischen den beiden Kurven, Referenz-Kennlinie 225 und Kennlinie 323, zu erkennen sind. Diese liegen in der Ausschwenkphase und in der Einschwenkphase. Gemäß diesem Ausführungsbeispiel unterscheiden sich die Amplituden der Referenz-Kennlinie 225 und der Kennlinie 323 in dem fünften Teilbereich. Wenn ein betragsmäßiger Unterschied der Amplituden einen Schwellenwert überschreitet, liegt gemäß einem Ausführungsbeispiel eine Abweichung 327 vor.

Somit werden die Abweichungen 327 gemäß einem Ausführungsbeispiel durch Analysen der Kennlinien 323 im Zeitbereich/Wegbereich ermittelt, in dem die zeitlichen/wegabhängigen Verläufe der Kennlinien 323 mit zeitlichen/wegabhängigen Verläufen der Referenz-Kennlinien 225 verglichen werden. Zusätzlich oder alternativ werden die Abweichungen 327 gemäß einem Ausführungsbeispiel durch Analysen der Kennlinien 323 z.B. im Frequenzbereich ermittelt, in dem Spektren der Kennlinien 323 mit Spektren der Referenz-Kennlinien 225 verglichen werden.

Die Unterteilung des Positionsverlaufs in die Teilbereiche 201, 202, 203, 204, 205 und 206 ermöglicht es, in den Prozessdaten erkannte Anomalien einer kinematischen Phase, z. B. dem Ausschwenken, zuzuordnen. Somit können bei einer erhöhten Stromaufnahme des Einstiegsystems bzw. Türsystems innerhalb dieses Teilbereichs, in der Instandhaltungsinformation Fehlerursachen, welche z. B. die Linearführung bzw. Führungseinrichtung betreffen, technisch komplett ausgeschlossen werden. Es können aufgrund von Demontage und Montage von Drehsäulen im Zuge eines Austauschens von Zahnräder beispielsweise Einstellungen des Türsystems verändert worden sein, wodurch zusätzliche Änderungen des Stromverlaufes und somit die Abweichungen 327 hervorgerufen worden sein könnten.

**Fig. 4** zeigt ein Ablaufdiagramm eines Verfahrens 400 zum Bereitstellen gemäß einem Ausführungsbeispiel. Das Verfahren 400 ist ausführbar, um eine Instandhaltungsinformation über ein Türsystem für ein Fahrzeug bereitzustellen. Hierbei ist das Verfahren 400 zum Bereitstellen mittels bzw. unter Verwendung der Vorrichtung aus einer der vorstehend beschriebenen Figuren oder einer ähnlichen Vorrichtung ausführbar. Gemäß einem Ausführungsbeispiel wird das Verfahren 400 ausgeführt, wenn ein Bewegungsvorgang einer Tür eines Türsystems erfolgt. Beispielsweise kann das Verfahren 400 ausgeführt, wenn eine Steuereinrichtung zum Steuern des Bewegungsvorgangs einen Beginn des Bewegungsvorgangs anzeigt, beispielsweise unter Verwendung eines Steuersignals.

Je nach Ausführungsform der Vorrichtung kann das Verfahren 400 vollständig oder teilweise entweder fahrzeugintern oder fahrzeugextern ausgeführt werden.

Dabei werden in einem Schritt 410 des Einlesens erfasste Prozessdaten hinsichtlich des Bewegungsvorgangs der Tür des Türsystems eingelesen. Die Prozessdaten repräsentieren hierbei ein aktuelles Verhalten zumindest eines Antriebselements des Türsystems während des Bewegungsvorgangs. Nachfolgend werden in einem Schritt 420 des Korrelierens die Prozessdaten mit einem Positionsverlauf von Positionen der Tür während des Bewegungsvorgangs korrigiert, um eine Kennlinie des aktuellen Verhaltens des zumindest einen Antriebselements an den Positionen der Tür zu generieren. Wiederum nachfolgend wird in einem Schritt 430 des Vergleichens die Kennlinie mit einer Referenz-Kennlinie, die ein Soll-Verhalten des zumindest einen Antriebselements an den Positionen der Tür repräsentiert, verglichen, um eine Abweichung der Kennlinie von der Referenz-Kennlinie zu ermitteln. Dann wird in einem Schritt 440 des Zuordnens die Abweichung einem Teilbereich des abhängig von einer Beteiligung unterschiedlicher Bewegungselemente des Türsystems an unterschiedlichen Phasen des Bewegungsvorgangs der Tür in eine Mehrzahl von Teilbereichen unterteilten Positionsverlaufs zugeordnet, um die Instandhaltungsinformation zu bestimmen.

Gemäß einem Ausführungsbeispiel weist das Verfahren 400 zum Bereitstellen einen Schritt 405 des Unterteilens auf. In dem Schritt 405 des Unterteilens wird in Abhängigkeit von einer Beteiligung der unterschiedlichen Bewegungselemente des Türsystems an den unterschiedlichen Phasen des Bewegungsvorgangs der Tür der Positionsverlauf in die Mehrzahl von Teilbereichen unterteilt. Der in die Teilbereiche unterteilte Bewegungsvorgang wird im Schritt 440 des Zuordnens verwendet. Zusätzlich oder alternativ weist das Verfahren 400 zum Bereitstellen einen Schritt 450 des Ausgebens auf. In dem Schritt 450 des Ausgebens wird die im Schritt 440 des Zuordnens bestimmte Instandhaltungsinformation an eine Schnittstelle zu einer Einrichtung zum Ausführen eines Algorithmus für zustandsabhängige Instandhaltung und/oder eines Algorithmus für vorausschauende Instandhaltung ausgegeben.

### BEZUGSZEICHENLISTE

- 100: Fahrzeug
- 110: Türsystem
- 111: Tür
- 112: Verriegelungseinrichtung
- 113: Schwenkeinrichtung
- 114: Führungseinrichtung
- 116: Antriebselement
- 118: Erfassungseinrichtung
- 119: Prozessdaten
- 120: Vorrichtung
- 122: Einleseeinrichtung
- 124: Korrelationseinrichtung
- 126: Vergleichseinrichtung
- 128: Zuordnungseinrichtung
- 129: Instandhaltungsinformation
- 130: Schnittstelle
- 140: Einrichtung zum Ausführen

- 200: Diagramm
- 201: erster Teilbereich - Entriegeln
- 202: zweiter Teilbereich - Ausschwenken
- 203: dritter Teilbereich - lineares Öffnen
- 204: vierter Teilbereich - lineares Schließen
- 205: fünfter Teilbereich - Einschwenken
- 206: sechster Teilbereich - Verriegeln
- 225: Referenz-Kennlinie

- 300: Vergleichsdiagramm
- 323: Kennlinie
- 327: Abweichung
- 400: Verfahren zum Bereitstellen
- 405: Schritt des Unterteilens
- 410: Schritt des Einlesens
- 420: Schritt des Korrelierens
- 430: Schritt des Vergleichens
- 440: Schritt des Zuordnens
- 450: Schritt des Ausgebens

## Patentansprüche

1. Verfahren (400) zum Bereitstellen einer Instandhaltungsinformation (129) über ein Türsystem (110) für ein Fahrzeug (100), wobei das Verfahren (400) folgende Schritte aufweist:
Einlesen (410) von erfassten Prozessdaten (119) hinsichtlich eines Bewegungsvorgangs einer Tür (111) des Türsystems (110), wobei die Prozessdaten (119) ein aktuelles Verhalten zumindest eines Antriebselements (116) des Türsystems (110) während des Bewegungsvorgangs repräsentieren;
Korrelieren (420) der Prozessdaten (119) mit einem Positionsverlauf von Positionen der Tür (111) während des Bewegungsvorgangs, um eine Kennlinie (323) des aktuellen Verhaltens des zumindest einen Antriebselements (116) an den Positionen der Tür (111) zu generieren;
Vergleichen (430) der Kennlinie (323) mit einer Referenz-Kennlinie (225), die ein Soll-Verhalten des zumindest einen Antriebselements (116) an den Positionen der Tür (111) repräsentiert, um eine Abweichung (327) der Kennlinie (323) von der Referenz-Kennlinie (225) zu ermitteln; und
Zuordnen (440) der Abweichung (327) einem Teilbereich (201, 202, 203, 204, 205, 206) des abhängig von einer Beteiligung unterschiedlicher Bewegungselemente (112, 113, 114) des Türsystems (110) an unterschiedlichen Phasen des Bewegungsvorgangs der Tür (111) in eine Mehrzahl von Teilbereichen (201, 202, 203, 204, 205, 206) unterteilten Positionsverlaufs, um die Instandhaltungsinformation (129) zu bestimmen.

2. Verfahren (400) gemäß Anspruch 1, mit einem Schritt (405) des Unterteilens des Positionsverlaufs in die Mehrzahl von Teilbereichen (201, 202, 203, 204, 205, 206) in Abhängigkeit von einer Beteiligung der unterschiedlichen Bewegungselemente (112, 113, 114) des Türsystems (110) an den unterschiedlichen Phasen des Bewegungsvorgangs der Tür (111).

3. Verfahren (400) gemäß einem der vorangegangenen Ansprüche, bei dem im Schritt (440) des Zuordnens eine erste Instandhaltungsinformation (129) bestimmt wird, wenn die Abweichung (327) einem ersten Teilbereich (201, 202, 203, 204, 205, 206) des Bewegungsvorgangs zugeordnet wird, an dem eine erste Teilmenge der Bewegungselemente (112, 113, 114) beteiligt ist, wobei im Schritt (440) des Zuordnens eine von der ersten Instandhaltungsinformation (129) unterschiedliche, zweite Instandhaltungsinformation (129) bestimmt wird, wenn die Abweichung einem zweiten Teilbereich (201, 202, 203, 204, 205, 206) des Bewegungsvorgangs zugeordnet wird, an dem eine zweite Teilmenge der Bewegungselemente (112, 113, 114) beteiligt ist.

4. Verfahren (400) gemäß einem der vorangegangenen Ansprüche, bei dem im Schritt (410) des Einlesens die Prozessdaten (119) ansprechend auf ein Türöffnungssignal und/oder ein Türschließsignal eingelesen werden.

5. Verfahren (400) gemäß einem der vorangegangenen Ansprüche, bei dem im Schritt (410) des Einlesens Prozessdaten (119) eingelesen werden, die eine Stromaufnahme des zumindest einen Antriebselements (116) repräsentieren, und/oder wobei im Schritt (410) des Einlesens ein Sensorsignal eingelesen wird, das die Positionen der Tür (111) während des Bewegungsvorgangs repräsentiert.

6. Verfahren (400) gemäß einem der vorangegangenen Ansprüche, mit einem Schritt (450) des Ausgebens der bestimmten Instandhaltungsinformation (129) an eine Schnittstelle (130) zu einer Einrichtung (140) zum Ausführen eines Algorithmus für zustandsabhängige Instandhaltung und/oder eines Algorithmus für vorausschauende Instandhaltung.

7. Verfahren (400) gemäß einem der vorangegangenen Ansprüche, bei dem zumindest einer der Schritte (410, 420, 430, 440) teilweise oder zur Gänze fahrzeugextern ausgeführt wird.

8. Vorrichtung (120) zum Bereitstellen einer Instandhaltungsinformation (129) über ein Türsystem (110) für ein Fahrzeug (100), wobei die Vorrichtung (120) eingerichtet ist, um die Schritte des Verfahrens (400) gemäß einem der vorangegangenen Ansprüche in entsprechenden Einheiten (122, 124, 126, 128) auszuführen und/oder anzusteuern.

9. Vorrichtung (120) gemäß Anspruch 8, die als eine fahrzeugexterne oder fahrzeuginterne Einrichtung ausgeführt ist.

10. Türsystem (110) für ein Fahrzeug (100), wobei das Türsystem (110) folgende Merkmale aufweist:
eine Vorrichtung (120) gemäß Anspruch 8 oder 9; und
die Tür (111), das zumindest eine Antriebselement (116) und die Bewegungselemente (112, 113, 114), wobei das zumindest eine Antriebselement (116) ausgebildet ist, um den Bewegungsvorgang der Tür (111) zu bewirken, wobei die Bewegungselemente (112, 113, 114) an den Bewegungsvorgang der Tür (111) beteiligt sind, wobei das zumindest eine Antriebselement (116) signalübertragungsfähig mit der als fahrzeugexterne Einrichtung ausgeführten Vorrichtung (120) verbindbar oder mit der als fahrzeuginterne Einrichtung ausgeführten Vorrichtung (120) verbunden ist.

11. Computerprogramm, das dazu eingerichtet ist, das Verfahren (400) gemäß einem der Ansprüche 1 bis 7 auszuführen und/oder anzusteuern.

12. Maschinenlesbares Speichermedium, auf dem das Computerprogramm nach Anspruch 11 gespeichert ist.
